(19) **Europäisches Patentamt / European Patent Office / Office européen des brevets**

(11) **EP 2 245 730 B1**

(12) **FASCICULE DE BREVET EUROPEEN**

(45) Date de publication et mention de la délivrance du brevet:
**19.12.2012 Bulletin 2012/51**

(21) Numéro de dépôt: **09713497.7**

(22) Date de dépôt: **17.02.2009**

(51) Int Cl.:
*H02M 7/217* (2006.01)  *H02M 1/42* (2007.01)
*H02M 1/12* (2006.01)  *H02M 7/25* (2006.01)

(86) Numéro de dépôt international:
**PCT/EP2009/051847**

(87) Numéro de publication internationale:
**WO 2009/103698 (27.08.2009 Gazette 2009/35)**

(54) **ALIMENTATION HAUTE TENSION MONO-ETAGE A HAUT RENDEMENT ET FAIBLE DISTORSION HARMONIQUE**

EINSTUFIGE HOCHSPANNUNGSSTROMVERSORGUNG MIT HOHEM WIRKUNGSGRAD UND GERINGER HARMONISCHER VERZERRUNG

SINGLE STAGE HIGH-VOLTAGE POWER SUPPLY WITH HIGH EFFICIENCY AND LOW HARMONIC DISTORTION

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **19.02.2008 FR 0800881**

(43) Date de publication de la demande:
**03.11.2010 Bulletin 2010/44**

(73) Titulaire: **Thales**
**92200 Neuilly Sur Seine (FR)**

(72) Inventeur: **CAPOGNA, Claudio**
**F-93600 Aulnay Sous Bois (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
WO-A-2006/043837    US-A- 5 311 419
US-A- 5 731 969    US-A1- 2001 036 094

**Description**

L'invention concerne les alimentations haute tension (ou HT) à haut rendement et à faible distorsion du courant réseau d'alimentation.

Les émetteurs radiofréquences de puissance comportent habituellement des étages de puissance à tubes utilisant une ou plusieurs hautes tensions continues. Ces tensions continues sont généralement fournies par des alimentations HT à partir d'un réseau électrique d'alimentation en courant alternatif. Pour les émetteurs de puissance les réseaux d'alimentation sont des réseaux triphasés de fréquence 50 Hz, ou 400 Hz notamment dans le cas d'équipements embarqués.

Les alimentations haute tension de l'état de l'art sont réalisées selon une structure faisant appel à une cascade d'au moins trois étages de conversion d'énergie, à savoir, un pont redresseur triphasé du courant réseau, de type Graetz, (redressement par diodes) suivi d'un étage tampon convertissant la tension redressée issue du pont de Graetz en courant ou en tension, puis d'un étage générant la ou les hautes tensions continues pour l'utilisation finale.

La publication internationale WO 2006/043837 A2 de EATON POWER QUALITY LTD du 27 avril 2006 montre, par exemple a la figure16 du document, une alimentation fournissant des tensions continues à partir d'un réseau triphasé. L'alimentation utilisé un convertisseur à découpage par phase à sortie continue unique.

Le brevet US-A-5 311 419 de SHIRES EDWIN J. du 10 mai 1994 montre une alimentation en courant continu à partir d'un réseau ayant au moins deux phases et un convertisseur de tension alternative en tension continue (AC/DC) par phase ayant chacun une unique sortie continue.

La demande de brevet US-2001/0036094 A1 de STRAND TIMOTHY ET AL du 1 novembre 2001 montre une alimentation en courant continu pour lampe à décharge à partir d'un réseau triphasé. Chacune des phases alimente un convertisseur AC/DC avant une seule sortie en tension continue.

Le brevet US-A-5 731 969 de SMALL KENNETH T. du 24 mars 1998 divulgue un convertisseur de puissance fournissant à partir d'un réseau triphasé une tension continuée. Le convertisseur de puissance comporte un convertisseur à découpage par phase ayant une sortie continue unique. Un circuit de contrôle des convertisseurs améliore le facteur de puissance de l'entrée triphasée.

Le rendement typique de tels types d'alimentations est de l'ordre de 85%.

L'inconvénient majeur de ces types d'alimentations, à trois étages en cascade est de prélever du courant sur le réseau avec un taux de distorsion élevé ce qui dégrade le facteur de puissance de l'alimentation. Le facteur de puissance Fp est défini par la relation

$$Fp = Pact/(Ueff.\ Ieff)$$

Pact est la puissance active fournie par le réseau à l'alimentation,
Ueff la tension efficace du réseau, et
Ieff le courant efficace absorbé par l'alimentation

Dans le meilleur des cas le facteur de puissance est égal à 1.

Ces distorsions du courant réseau peuvent être corrigées par un sous-ensemble externe couplé à l'entrée de l'alimentation appelé correcteur de facteur de puissance. Néanmoins les correcteurs de facteur de puissance présentent l'inconvénient de diminuer la fiabilité de l'alimentation avec un impact significatif sur son coût, son volume et sa masse.

L'utilisation d'un correcteur du facteur de puissance conduit, en outre, à une diminution du rendement global de l'alimentation ce qui n'est pas acceptable pour des équipements embarqués.

Afin de pallier les inconvénients des alimentations HT de l'état de l'art, l'invention propose une alimentation haute tension destinée à être connectée, par une entrée réseau, à un réseau en courant alternatif de fréquence Fr, à n phases P1, P2,..Pi,..Pn, n étant un nombre entier supérieur ou égal à 2, i étant le rang de la phase compris entre 1 et n, et fournissant à au moins deux sorties HT, des hautes tensions continues HT de sortie, l'alimentation comportant :

-   un module de conversion Mi haute tension monophasé par phase Pi du réseau ayant un circuit de redressement de courant connecté, par une entrée monophasée du module de conversion Mi, sur une respective phase Pi du réseau et, par une sortie de courant redressé, à un circuit de découpage ayant au moins un transistor de découpage à une fréquence de découpage dudit courant redressé et p circuits secondaires HT S1, S2,...Sj,...Sp, fournissant chacun une HT secondaire Vc1, Vc2, Vcj,...Vcp, p étant un nombre entier supérieur ou égal à 2, j étant le rang du circuit secondaire HT compris entre 1 et p,
-   une unité de commande et de régulation UC de l'alimentation comportant un circuit de commande CCM1, CCM2,..

CCMi,... CCMn par module de conversion M1, M2,..Mi,...Mn fournissant un signal de commande Cd1, Cd2,...Cdi,...Cdn pour mettre le transistor de découpage du module de conversion, soit dans un état passant pendant une première période de temps t1i, soit dans un état bloqué pendant un deuxième période de temps suivante t2i à la fréquence de découpage Fd,

t1i étant la durée de l'état passant du transistor de découpage du module Mi,
t2i étant la durée de l'état bloqué du transistor de découpage du même module Mi,

$$Td = t1i + t2i \text{ étant la période découpage avec } Td = 1/Fd,$$

caractérisée en ce que les n circuits secondaires HT Sj de même rang j des n modules M1, M2, ...Mi,...Mn sont connectées en série avec les n circuits secondaires HT Sj+1 de rang j+1 des n modules de conversion pour fournir les hautes tensions continues HT (Vk1, Vk2, Vk3) de sortie somme des tensions secondaires Vc1, Vc2,...Vcj,..Vcp des circuits secondaires HT en série.

Avantageusement, le circuit de découpage comporte un transformateur ayant un bobinage primaire BP et p bobinages secondaires Bs1, Bs2, Bsj,... Bsp, le bobinage primaire BP étant en série avec le transistor de découpage en parallèle avec une capacité de maintient formant un circuit primaire de découpage, un bobinage secondaire Bsj en série avec au moins une diode de redressement Dsj formant un circuit secondaire HT Sj fournissant la HT secondaire Vcj.

Dans une réalisation de l'alimentation, l'unité de commande et de régulation UC de l'alimentation comporte un amplificateur d'erreur AMP fournissant un signal d'erreur uer différence entre une tension uVk image de la HT de sortie de l'alimentation et un signal de référence Vkréf de cette HT de sortie pour réguler, par une boucle d'asservissement, la HT de sortie de l'alimentation.

Dans une autre réalisation de l'alimentation, chacun des circuits de commande CCMi d'un module Mi comporte un comparateur de niveau COMP recevant à une entrée + un signal image us du courant dans le circuit secondaire, l'autre entrée - étant connectée à un potentiel de référence et fournissant à une sortie un signal d'absence de courant secondaire Is dans les circuits de sortie du circuit de découpage pour commander la mise à l'état passant du transistor de découpage Trd du module Mi considéré lors du passage par 0 ampère du courant secondaire Is.

Dans une autre réalisation de l'alimentation, chacun des circuits de commande CCMi comporte un dispositif de correction de distorsion du courant alternatif d'entrée du modulé Mi considéré par l'utilisation d'une boucle de courant par module Mi ayant comme consigne la tension d'entrée du réseau, le dispositif de correction recevant par une entrée, un signal up image du courant dans le circuit primaire du circuit de découpage, par une autre entrée un signal ur image de la tension Vrd en sortie circuit de redressement de courant monophasé du module Mi et fournissant par une sortie un signal de commande du transistor à découpage Trd du module Mi considéré.

Dans une autre réalisation de l'alimentation, le dispositif de correction de distorsion comporte un dispositif de compensation des variations de la tension d'entrée du réseau, le dispositif de compensation comportant un diviseur analogique ayant une entrée a de division attaquée par le signal ur image de la tension Vrd en sortie circuit de redressement, une entrée b de division attaquée par le signal ur image de la tension Vrd filtré par un passe bas puis multiplié par deux par un multiplicateur x2 et une sortie a/b fournissant un signal urf image de la tension d'entrée réseau stabilisée pour attaquer une entrée du dispositif de correction de la distorsion.

Dans une autre réalisation de l'alimentation, le dispositif de correction de distorsion comporte un multiplicateur de signaux recevant par une entrée le signal d'erreur uer en sortie de l'amplificateur d'erreur AMP et, par une autre entrée le signal urf en sortie du diviseur analogique, le multiplicateur fournissant, à une sortie, le signal de consigne de la tension d'entrée réseau.

Dans une autre réalisation de l'alimentation, chacun des circuits de contrôle CCMi comporte un circuit logique de commandé pour fournir à partir du signal de commande du transistor à découpage Trd du module Mi considéré en sortie du dispositif de correction de la distorsion et, à partir du signal d'absence de courant secondaire Is, un signal logique de rapport cyclique T1i/Td variable pour la commande du transistor de découpage Trd du module Mi considéré.

Un principal objectif de cette invention est d'améliorer la fiabilité des alimentations HT alimentées par un réseau triphasé par utilisation d'un étage de conversion unique, cet étage étant formé de trois convertisseurs monophasés.

Un autre objectif est d'obtenir un équilibrage des courants dans les trois phases par l'imbrication des secondaires des convertisseurs monophasés.

Un autre objectif est d'obtenir une alimentation avec un rendement de conversion élevé par utilisation de convertisseurs à découpage élémentaires, par exemple de type Fly-back, avec un rapport de transformation optimisé pour fonctionner avec une commutation des transistors de découpage des Fly-back au passage par 0 ampère du courant découpé « Zéro Voltage Switching » ou ZVS en langue anglaise,

Un autre objectif est d'obtenir un taux harmonique de distorsion du courant d'alimentation alternatif inférieur à 5% par l'utilisation de boucles de courant interne aux convertisseurs monophasés ayant pour consigne la tension d'entrée du réseau.

L'invention sera mieux comprise à l'aide d'un exemple de réalisation d'une alimentation HT selon l'invention en référence aux dessins indexés dans lesquels :

- la figure 1 montre un exemple de réalisation d'une alimentation HT selon l'invention ;
- la figure 2 montre un schéma électrique d'un des modules Mi de l'alimentation triphasée de la figure 1 ;
- la figure 3 montre un exemple de réalisation d'une unité de commande et de régulation de l'alimentation de la figure 1 selon l'invention ;
- la figure 4a montre partiellement la tension redressée aux bornes du pont de Graetz des modules de l'alimentation de la figure 1 ;
- la figure 4b montre le courant secondaire Is dans les circuits de sortie du circuit de découpage de l'alimentation ;
- la figure 4c montre le courant Ip dans le circuit primaire du circuit de découpage de l'alimentation ;
- la figure 4d montre le signal de commande Cd appliqué au transistor Trd de découpage d'un des modules ;
- la figue 5a montre la phase transitoire lors d'une augmentation rapide de charge pulsée et ;
- la figure 5b la phase transitoire lors d'une diminution rapide de charge pulsée.

Par la suite est décrit un exemple de réalisation d'une alimentation selon l'invention connectée sur un réseau triphasé (n=3) chacun des trois modules de conversion M1, M2, M3 comportant trois circuits secondaires HT S1, S2, S3 (p=3) pour fournir trois HT de sortie Vk1, Vk2, Vk3.

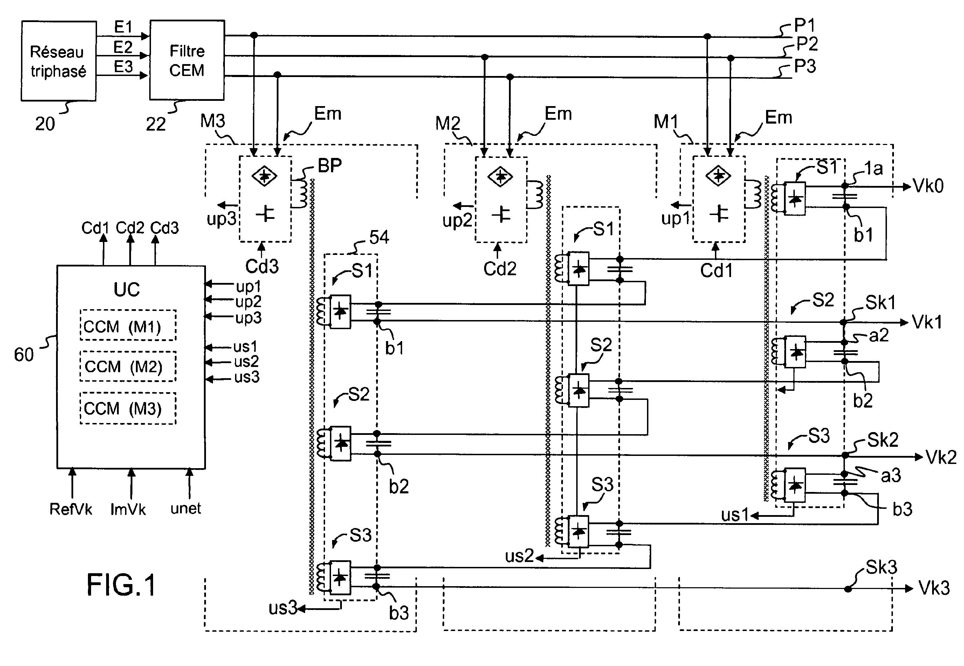

La figure 1 montre un exemple de réalisation de l'alimentation HT selon l'invention destinée à être connectée à un réseau triphasé 20 de tension Ue=220volts efficaces entre phases P1, P2, P3 fonctionnant à la fréquence Fr de 400Htz.

Le réseau triphasé 20 est connecté à l'alimentation par l'intermédiaire d'un filtre CEM 22 afin de respecter les recommandations de compatibilité électromagnétique avec d'autres services ou d'autres équipements.

Les trois modules de conversion M1, M2, M3 monophasés sont connecté par leur entrée réseau Em monophasée respectivement sur les trois phases P1, P2, P3 du réseau, un premier module M1 connectée entre la première phase P1 et la deuxième phase P2, un deuxième module M2 connecté entre la deuxième phase P2 et la troisième phase P3 et un troisième module M3 connecté entre la première phase P1 et la troisième phase P3 de façon à équilibrer les niveaux des courants dans les trois phases du réseau 20. L'alimentation fournit trois niveaux de HT de sortie Vk1, Vk2, Vk3 par rapport à un potentiel de référence Vk0.

Chaque module de conversion Mi, i étant un nombre prenant la valeur 1, 2 ou 3 dans cette réalisation à trois modules, est un Fly-back multi-secondaires avec commutation au zéro de tension, dite commutation ZVS. Cette technique allie la simplicité du montage avec un minimum de composants et un rendement optimisé.

Chacun des modules M1, M2, M3 comporte, dans cette réalisation, trois circuits secondaires HT S1, S2, S3 fournissant respectivement trois HT secondaires séparées Vc1, Vc2, Vc3.

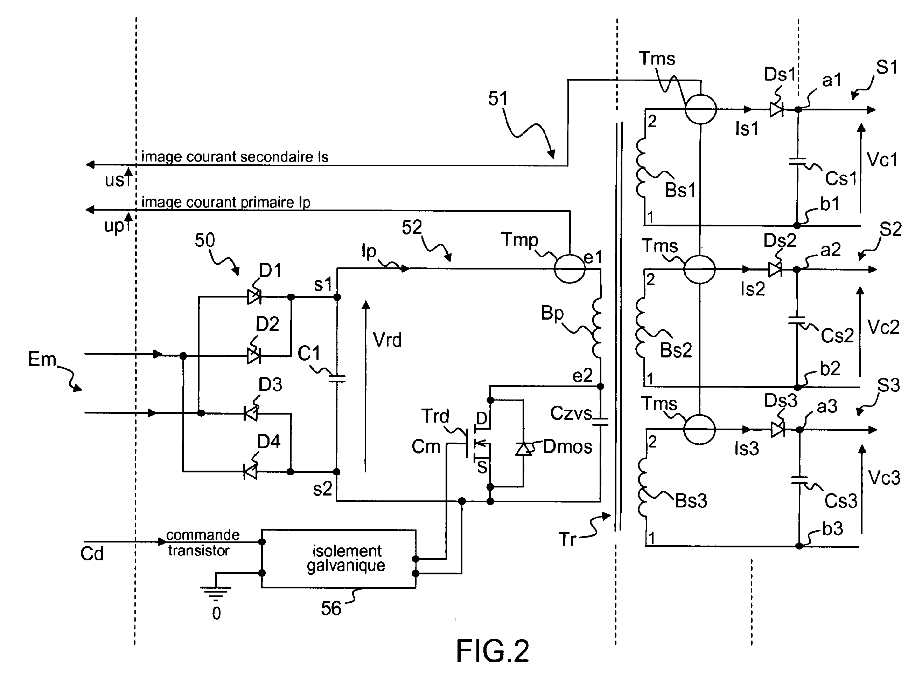

La figure 2 montre un schéma électrique d'un des modules Mi de l'alimentation triphasée de la figure 1.

L'entrée réseau Em du module Mi est connectée à un pont de Graetz 50 comportant quatre diodes de redressement D1, D2, D3, D4 montées de façon connue pour fournir par deux bornes de sortie s1, s2 à un circuit de découpage 51 (dans cet exemple d'un Fly-back multi-secondaires) une tension redressée Vrd.

Le circuit de découpage 51 comporte un transformateur Tr ayant un bobinage primaire BP et trois bobinages secondaires Bs1, Bs2, Bs3. Le bobinage primaire BP est connecté en série avec un transistor Trd de découpage en parallèle avec une capacité de maintient Czvs formant un circuit primaire de découpage 52.

Chacun des bobinages secondaires Bs1, Bs2, Bs3 forme avec une respective diode de redressement en série Ds1, Ds2, Ds3 et une respective capacité de filtrage Cs1, Cs2, Cs3 les trois circuits secondaires HT S1, S2, S3 séparés.

Le transistor de découpage Trd, par exemple de type MOS, est connecté par son drain D à une extrémité e2 du bobinage primaire BP et par sa source S à une borne de sortie s2 du pont de Graetz. L'autre extrémité e1 du bobinage primaire BP est connectée à l'autre borne de sortie s1 du pont de Graetz.

Le transistor MOS Trd comporte une entrée de commande Cm, qui, dans cet exemple de réalisation est la porte G du transistor MOS, pour être mis, soit dans état passant pendant une première période de temps t1, soit dans un état bloqué par un deuxième période de temps suivante t2. Le temps Td = t1 +t2 étant la période découpage du module avec :

$$Td = 1/Fd \quad Fd \text{ fréquence de découpage du Fly-back.}$$

De façon connue, dans ce type de circuit de découpage, l'énergie transmise par le circuit primaire aux circuits de sortie S1, S2, S3 par le transformateur Tr est contrôlée par la variation du temps de conduction t1 du transistor de découpage Trd par rapport à la période Td.

Le premier circuit secondaire HT S1 fournit, entre deux bornes a1 et b1, la HT secondaire Vc1, le deuxième circuit secondaire HT S2 fournit, entre deux bornes a2 et b2, la HT secondaire Vc2 et le troisième circuit secondaire HT S3 fournit, entre deux bornes a3 et b3, la HT secondaire Vc3.

En se référant au schéma de l'alimentation de la figure 1, et selon une principale caractéristique de l'alimentation selon l'invention, les trois premiers circuits secondaires HT S1 de chacun des trois modules M1, M2, M3, fournissant chacun la HT secondaire Vc1, sont connectées en série pour obtenir, à une première sortie Sk1 (borne b1 du module M3), le premier niveau de HT de sortie Vk1, cette première sortie Sk1 étant connectée aux deuxièmes circuits secondaires HT S2 en série de chacun des trois modules M1, M2, M3, fournissant chacun la HT secondaire Vc2, pour obtenir, à une deuxième sortie Sk2 (borne b2 du module M3), le deuxième niveau de HT de sortie Vk2, cette deuxième sortie Sk2 étant connectée aux troisièmes circuits secondaires HT S3 en série des modules M1, M2, M3, fournissant chacun la HT secondaire Vc3, pour obtenir, à une troisième sortie Sk3 (borne b3 du module M3), le troisième niveau de HT de sortie Vk3 le plus élevé.

La tension HT de sortie Vk3 en sortie Sk3 sera exprimée par la somme des tensions des circuits secondaires HT en série soit :

$$Vk3 = 3.Vc1 + 3.Vc2 + 3.Vc3$$

Chacun des modules M1, M2, M3 comporte, pour le contrôle de l'alimentation décrit par la suite (voir figure 2) :

- un transformateur Tmp de courant primaire fournissant une tension de mesure up image du courant instantanée Ip dans le circuit primaire 52 du circuit de découpage 51,
- un transformateur Tms de courant secondaire fournissant une tension de mesure us image du courant instantanée Is somme des courants instantanés Isl, Is2,..Isj,...Isp, dans les p circuits secondaires HT S1, S2, ...Sj...Sp, de l'alimentation. Dans cet exemple p étant égale à trois, pour les courants Is1, Is2, Is3.

Dans la figure 2 le transformateur Tms est représenté de façon à montrer que les fils de connexion entre les bobinages secondaires Bs1, Bs2,... Bsj,..Bsp et les respectives diodes de redressement Ds1, Ds2,.. Dsj,... Dsp passent dans le primaire du transformateur de courant secondaire Tms.

- un module d'isolement galvanique 56 d'une commande Cd d'état du transistor de découpage Trd appliquée à son entrée de commande Cm.

L'alimentation selon l'invention comporte, en outre, (voir figure 1) une unité de commande UC 60 et de régulation pilotant notamment l'entrée de commande Cm de chacun des transistors Trd de découpage MOS des Fly-back des modules M1, M2, M3.

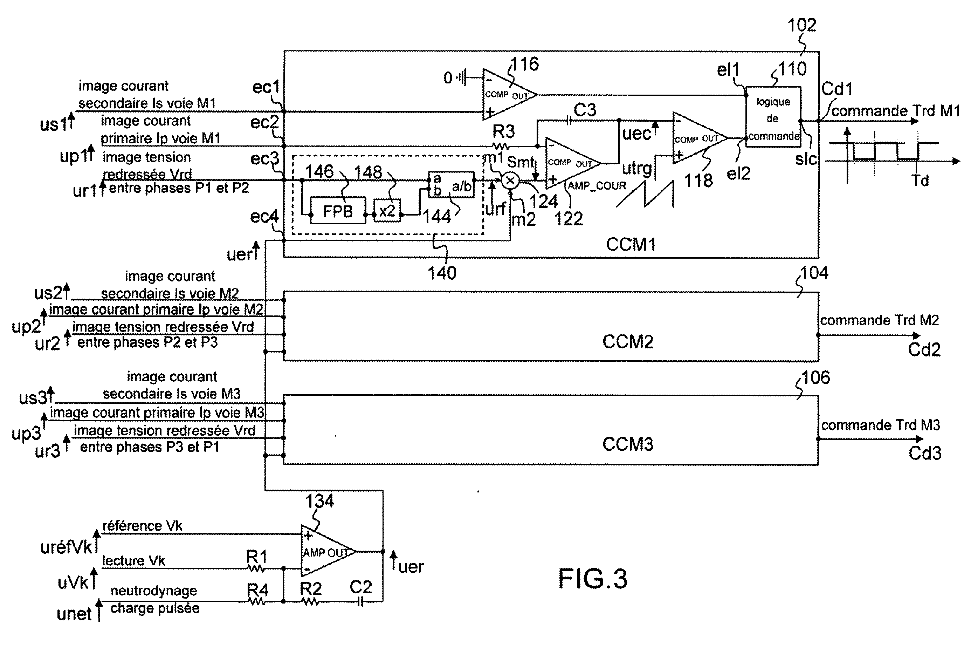

La figure 3 montre un exemple de réalisation d'une unité de commande et de régulation UC 60 de l'alimentation de la figure 1 selon l'invention.

L'unité de commande et régulation UC 60 comporte un circuit de contrôle et régulation CCM 102, 104, 106 par module M1, M2, M3 de l'alimentation. La figure 3 montre le détail du circuit de contrôle CCM 102 destiné à la commande du module M3.

Un circuit de contrôle CCMi d'un respectif module Mi de l'alimentation (i prenant les valeurs 1, 2, 3 dans cette réalisation) comporte une sortie de commande Cdi du transistor Trd du circuit de découpage du module Mi commandé et des entrées ec1, ec2, ec3, ec4 de contrôle des différentes fonctions du circuit de contrôle CCMi.

Le circuit de contrôle CCMi comporte une logique de commande 110 fournissant à une sortie circuit de contrôle CCMi un signal de commande Cdi du transistor Trd MOS du Fly-back du module Mi et deux entrées logiques, une première entrée el1 attaquée par une sortie Out d'un premier comparateur de niveau CMP 116 fournissant à sa sortie Out un signal de passage par 0 ampère du courant secondaire Is des circuits secondaires S1, S2, S3 du Fly-back, une deuxième entrée el2 attaquée par une sortie Out d'un deuxième comparateur de niveau CMP 118.

Une première fonction réalisée par le circuit de contrôle CCMi consiste dans une mise en conduction du transistor Trd de découpage (voir figure 2) pilotée par l'information d'absence de courant Is dans les circuits secondaires S1, S2, S3. A cet effet les entrées de contrôle des circuits de contrôle CCM 102, 104, 106 sont attaquées par les signaux suivants

- la première entrée ec1 est attaquée par le signal us image du courant secondaire Is dans les circuits de sortie S1, S2, S3 du circuit de découpage du module Mi considéré, soit : us1, pour le circuit CCM 102 de la voie 1 (ou du module M1), us2, pour le circuit CCM104 de la voie 2 (ou du module M2), us3 pour le circuit CCM 106 de la voie 3 (ou du module M3),

Le signal image us du courant secondaire Is du module Mi considéré est appliqué à l'entrée + du premier comparateur de niveau CMPN 116, l'autre entrée - étant reliée à un potentiel de référence, en l'occurrence la masse au potentiel 0volts.

La sortie Out du premier comparateur de niveau CMP 116 change d'état lors du passage du courant secondaire Is du module considéré appliqué à l'entre + du comparateur par une valeur proche de 0 ampère. Cette fonction assure le pilotage du circuit Fly-back en mode ZVS.

Pour assurer d'autres fonctions décrites par la suite, le circuit de contrôle CCMi reçoit les signaux suivants :

- par la deuxième entrée ec2 un signal up image du courant primaire Ip dans le circuit primaire 52 du Fly-back du module Mi considéré, soit : up1, pour le circuit CCM 102 de la voie 1 (ou du module M1), up2, pour le circuit CCM 104 de la voie 2 (ou du module M2), up3 pour le circuit CCM 106 de la voie 3 (ou du module M3),
- par la troisième entrée ec3 un signal ur image de la tension redressée Vrd en sortie du pont de Graetz du module Mi considéré, soit : ur1, pour le circuit CCM 102 de la voie 1 (ou du module M1), ur2, pour le circuit CCM 104 de la voie 2 (ou du module M2), ur3 pour le circuit CCM 106 de la voie 3 (ou du module M3),
- par la quatrième entrée ec4 un signal d'erreur uer commun aux trois circuits de contrôle et régulation CCM 102, 104, 106 pour la régulation des HT de sortie Vk1, Vk2, Vk3 de l'alimentation.

Le circuit de contrôle et de régulation CCMi, comporte un troisième comparateur intégrateur CMP 122 dont la sortie Out attaque l'entrée - du deuxième comparateur 118, son entrée + étant attaquée par un signal utrg de forme triangulaire, à la fréquence de découpage Fd du Fly-back.

L'entrée - du troisième comparateur intégrateur CMP 122 est attaquée, par l'intermédiaire d'une résistance R3, par le signal up image du courant Ip dans le circuit primaire 52 du Fly-back. Le comparateur intégrateur CMP 122 intègre le courant primaire Ip du circuit de découpage à sa valeur moyenne par la résistance R3 et une capacité de contré réaction C3, ce qui permet de comparer la valeur moyenne du courant primaire Ip à la tension image de la tension redressée Vrd du réseau.

L'entrée + du troisième comparateur CMP 122 est attaqué par un signal Smt en sortie d'un multiplicateur 124 résultant de la multiplication d'un signal urf appliqué à une entrée m1 du multiplicateur 124 par un signal d'erreur uer (entrée ec4) appliqué à une deuxième entrée m2 du multiplicateur.

Le signal urf est une tension image de la tension Vrd redressée stabilisée par un dispositif de compensation 140 décrit plus loin.

Le signal d'erreur uer résulte de la comparaison, par un amplificateur d'erreur AMP 134 de l'unité de contrôle UC 60, entre une référence urefVk de tension HT Vk3 souhaitée et l'image uVk de la HT Vk3 en sortie de l'alimentation.

Selon une autre principale caractéristique de l'alimentation selon l'invention, chacun des circuits de commande CCMi comporte un dispositif de correction de distorsion du courant alternatif d'entrée réseau du modulé Mi considéré par l'utilisation d'une boucle de courant par module Mi ayant comme consigne la tension d'entrée du réseau ur.

Le dispositif de correction reçoit par une entrée ec2, un signal up image du courant dans le circuit primaire 54 du circuit de découpage, par une autre entrée ec3 un signal ur image de la tension Vrd en sortie circuit de redressement 50 de courant monophasé du module Mi et fournit, par une sortie Cdi, un signal de commande du transistor à découpage Trd du module Mi considéré.

Le dispositif de correction de distorsion comporte le dispositif de compensation 140 de la tension ur image de la tension Vrd en sortie du pont de Graetz de façon à éviter une variation de tension en sortie Out de l'amplificateur d'erreur AMP 134 lors des variations de la tension du réseau triphasé et ainsi garder la dynamique de l'amplificateur d'erreur AMP 134 fournissant l'information d'erreur uer pour la correction des variations des tensions Vk1, Vk2, Vk3 en sortie de l'alimentation.

A cet effet le circuit de contrôle CCMi comporte un diviseur analogique 144 ayant une sortie de division a/b connectée à la deuxième entrée m2 du multiplicateur 124. Une entrée a du diviseur analogique 144 est attaquée par le signal ur image de la tension redressée Vrd en sortie du pont de Graetz (entrée ec3 du CCM), l'autre entrée b du diviseur analogique 144 étant attaquée par la valeur moyenne urmoy résultant du signal image ur de la tension redressée Vrd filtrée par un passe bas FPB 146 puis multipliée par un multiplicateur par deux x2 148.

Lorsque la tension redressée Vrd varie (tension d'entrée du réseau) le niveau en sortie a/b du diviseur reste stable.

Le deuxième comparateur 118 reçoit, par son entré - un signal uec en sortie du troisième comparateur 122 représentant l'écart du courant dans la phase du module Mi considéré par rapport à la consigne de tension redressée Vrd multiplié par l'erreur de tension uer (entrée m2 du multiplicateur), par son entrée - le signal triangulaire utrg la fréquence de découpage Fd pour fournir, à sa sortie Out, un signal logique de commande à la fréquence Fd de découpage de rapport cyclique variable en fonction du niveau du signal uec pour attaquer l'entrée eI2 de la logique de commande 110 du transistor Trd de découpage.

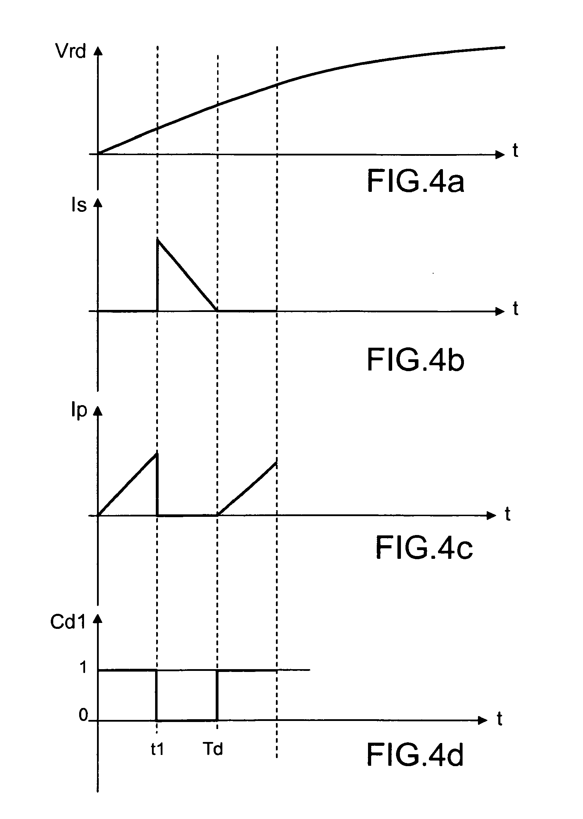

La figure 4a montre partiellement la tension redressée Vrd aux bornes du pont de Graetz des modules Mi de l'alimentation de la figure 1 attaquant le circuit primaire 52 de découpage à la fréquence du réseau soit dans cet exemple à 400Hz.

La figure 4b montre le courant secondaire Is dans les circuits de sortie du circuit de découpage de l'alimentation.

La figure 4c montre le courant Ip dans le circuit primaire 52 du circuit de découpage l'alimentation. Dans cet exemple la fréquence de découpage Fd est de 10KHz.

La figure 4d montre le signal de commande Cdi appliqué au transistor Trd de découpage d'un des modules Mi. Pendant le temps t0 à t1 le transistor Trd est rendu passant (état 1 sur la figure 4d), le courant primaire Ip croît, de l'énergie est emmagasinée dans la self Lb du bobinage BP du transformateur Tr puis décroît brusquement lors de l'inversion de la commandé du transistor de découpage Trd le mettant à l'état bloqué (état 0 sur la figure 4d). A parti du temps t1 le courant secondaire croît brusquement et diminue progressivement jusqu'à 0 ampère. L'énergie est fournie aux circuits de sortie des Fly-back. A la fin de la période Td lorsque le transistor Trd est à nouveau commandé à l'état passant, le cycle recommence.

Dans cette réalisation, la commutation du transistor Trd s'effectue lors du front de descente au temps Td lorsque le courant secondaire Is devient nul.

Dans le cas d'une application de l'alimentation pour des charges présentant des variations cycliques rapides importantes, l'alimentation peut présenter des instabilités. C'est le cas d'alimentations d'émetteurs radiofréquence fournissant des impulsions répétitives pendant un laps de temps déterminé. Ce type de charge est appelée charge pulsée. Par exemple dans le cas d'utilisation de l'alimentation selon l'invention pour alimenter un tube hyperfréquence à onde progressive pour application radar en régime impulsionnel, les tensions continues appliquées au tube étant de la classe 15kV.

Dans ce cas de charges pulsées, le courant en sortie de l'alimentation varie entre 0 ampère et une valeur de courant de charge Ich maximum de façon répétitive à une fréquence Fch qui peut dans certains cas être proche de la fréquence du réseau Fr ce qui peut entraîner une instabilité de la régulation de la tension de sortie d'alimentation. Le dispositif de régulation de l'alimentation HT, dans ce cas de charge pulsée à une fréquence Fch inférieure à la fréquence Fr du réseau Fr, ne sait pas reconnaître s'il s'agit d'une variation de la tension d'entrée du réseau ou d'une variation de la charge.

Lorsque la fréquence de répétition Fch de la charge est inférieure à la fréquence Fr du réseau d'alimentation, la tension de sortie de l'amplificateur d'erreur AMP 134 doit être compensée pour éviter une perturbation de l'asservissement de la HT de sortie Vk3. A cet effet un signal de neutralisation unet à la fréquence Fch de variation de la charge est appliqué à travers une résistance R4 à l'entrée - de l'amplificateur d'erreur AMP 134.

Le signal de neutralisation unet est une image de la variation du courant de charge appliqué en opposition de phase avec la variation du signal de lecture uVk à l'entrée - de l'amplificateur d'erreur AMP 134 produite par la variation de courant de charge à la fréquence de cette variation afin de la neutraliser.

Dans une réalisation de l'alimentation de la figure 1, les tensions des circuits secondaires HT sont

$$Vc1 = 3Kvolts, Vc2 \text{ et } Vc3 = 1KVolt,$$

les hautes tensions HT de sortie résultantes : Vk3 = 15Kvolt, Vk2=12Kvolts, Vk1=9Kvolts
le taux global d'harmoniques du courant d'entrée réseau est réduit à 5%,
le rendement est supérieur à 89%.

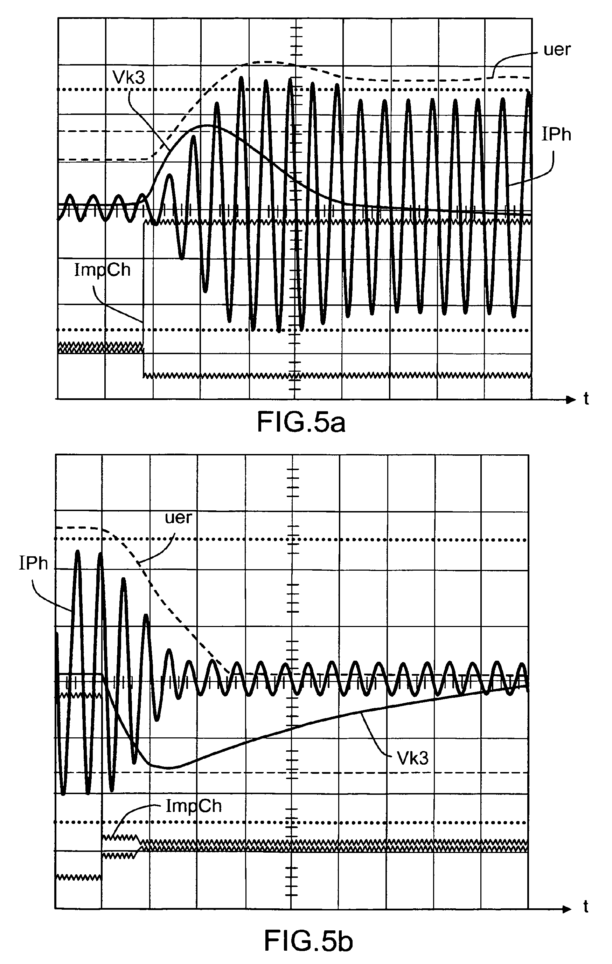

La figue 5a montre la phase transitoire lors d'une augmentation rapide de charge pulsée et la figure 5b la phase transitoire lors d'une diminution rapide de charge de l'alimentation dans l'application à une charge pulsée. Les figures 5a et 5b montrent :

- l'impulsion de commande de charge pulsée ImpCh,
- la variation du courant Iph dans une phase du réseau alternatif,
- la tension uer en sortie de l'amplificateur d'erreur AMP 134 de l'UC,
- le régime transitoire de la HT de sortie Vk3 de l'alimentation soit une variation de l'ordre de 300Volts (200Volts par division) pour une tension Vk3 de 15Kvolts.

Le schéma de l'alimentation de la figure 1 selon l'invention, montre les différents signaux aux entrées et sorties de l'unité de commande UC (60).

L'unité de commande fournit un signal de commande Cd1 en sortie du circuit de contrôle CCM (M1) pour la commandé du transistor de découpage Trd du Fly- back du module M1, Cd2 en sortie du circuit de contrôle CCM (M2) pour la commandé du transistor de découpage Trd du Fly- back du module M2 et un signal de commande Cd3 en sortie du circuit de contrôle CCM (M3) pour la commandé du transistor de découpage Trd du Fly- back du module M3

L'unité de contrôle reçoit :

- les tensions up1, up2, up3 et us1, us2, us3 images des courants primaires et courants secondaires dans les respectifs circuits primaire 52 et circuits secondaires HT des Fly-back des modules,
- la tension de référence refVk, la tension uVk image de la HT de sortie de l'alimentation Vk3 et le signal de compensation unet de charge pulsée.

La solution d'amélioration de comportement de convertisseur triphasé/continu HT décrite par l'exemple de la figure 1, est applicable à tout convertisseur alternatif (monophasé ou triphasé) / continu à isolement galvanique pour lequel toutes ou majeure partie des propriétés de cette invention sont recherchées.

L'obtention de l'objectif de rendement par utilisation d'un Fly-back ZVS qui entraîne un fonctionnement non synchronisable, ne nuit en rien aux objectifs usuels de compatibilité électromagnétique (CEM). Ce convertisseur est de facto enfermé dans la même zone « hermétique » que le filtre CEM 22. De plus ce filtre CEM est allégé, en performance, en volume et en coûts, en raison du faible taux de distorsion de courant réseau car les composantes basses fréquences du spectre de courant, qui dimensionnent notablement les composants passifs du filtre, sont en fait quasiment inexistantes.

## Revendications

1. Alimentation haute tension destinée à être connectée, par une entrée réseau (E1, E2, E3), à un réseau en courant alternatif (20) de fréquence Fr, à n phases P1, P2,..Pi,..Pn, n étant un nombre entier supérieur ou égal à 2, i étant le rang de la phase compris entre 1 et n, et fournissant à au moins deux sorties HT (Sk1, Sk2, Sk3), des hautes tensions continues HT (Vk1, Vk2, Vk3) de sortie, l'alimentation comportant :

   - un module de conversion Mi haute tension monophasé par phase Pi du réseau ayant un circuit de redressement (50) de courant connecté, par une entrée monophasée (Em) du module de conversion Mi, sur une respective phase Pi du réseau et, par une sortie (s1, s2) de courant redressé, à un circuit de découpage (51) ayant au moins un transistor de découpage (Trd) à une fréquence (Fd) de découpage dudit courant redressé et p circuits secondaires HT S1, S2,...Sj,...Sp, fournissant chacun une HT secondaire Vc1, Vc2, Vcj,...Vcp, p étant un nombre entier supérieur ou égal à 2, j étant le rang du circuit secondaire HT compris entre 1 et p,
   - une unité de commande et de régulation UC (60) de l'alimentation comportant un circuit de commande CCM1, CCM2,.. CCMi,... CCMn (102, 104, 106) par module de conversion M1, M2,..Mi,...Mn fournissant un signal de commande Cd1, Cd2,...Cdi,...Cdn pour mettre le transistor de découpage (Trd) du module de conversion, soit dans un état passant pendant une première période de temps t1i, soit dans un état bloqué pendant un deuxième période de temps suivante t2i à la fréquence de découpage Fd,

   t1i étant la durée de l'état passant du transistor de découpage (Trd) du module Mi,
   t2i étant la durée de l'état bloqué du transistor de découpage (Trd) du même module Mi,

   $$Td = t1i+t2i \text{ étant la période découpage avec } Td =1/Fd,$$

   **caractérisée en ce que** les n circuits secondaires HT Sj de même rang j des n modules M1, M2, ...Mi,...Mn sont connectées en série avec les n circuits secondaires HT Sj+1 de rang j+1 des n modules de conversion pour fournir les hautes tensions continues HT (Vk1, Vk2, Vk3) de sortie somme des tensions secondaires Vc1, Vc2,...Vcj,..Vcp des circuits secondaires HT en série.

2. Alimentation haute tension selon la revendication 1, **caractérisé en ce que** le circuit de découpage (51) comporte un transformateur (Tr) ayant un bobinage primaire BP et p bobinages secondaires Bs1, Bs2, Bsj,... Bsp, le bobinage primaire BP étant en série avec le transistor (Trd) de découpage en parallèle avec une capacité de maintient (Czvs) formant un circuit primaire de découpage (52), un bobinage secondaire Bsj en série avec au moins une diode de redressement Dsj formant un circuit secondaire HT Sj fournissant la HT secondaire Vcj.

3. Alimentation haute tension selon l'une des revendications 1 ou 2, **caractérisé en ce que** l'unité de commande et de régulation UC (60) de l'alimentation comporte un amplificateur d'erreur AMP (134) fournissant un signal d'erreur uer différence entre une tension uVk image de la HT de sortie (Vk1, Vk2, Vk3) de l'alimentation et un signal de référence urefVk de cette HT de sortie pour réguler, par une boucle d'asservissement, la haute tension HT de sortie (Vk1, Vk2, Vk3) de l'alimentation.

4. Alimentation haute tension selon l'une des revendications 1 à 3, **caractérisé en ce que** chacun des circuits de commande CCMi d'un module Mi comporte un comparateur de niveau COMP (116) recevant à une entrée + un signal image us du courant dans le circuit secondaire (54), l'autre entrée - étant connectée à un potentiel de référence (M) et fournissant à une sortie (Out) un signal d'absence de courant secondaire Is dans les circuits de sortie du circuit de découpage (51) pour commander la mise à l'état passant du transistor de découpage (Trd) du module Mi considéré lors du passage par 0 ampère du courant secondaire Is.

5. Alimentation haute tension selon l'une des revendications 1 à 4, **caractérisé en ce que** chacun des circuits de commande CCMi comporte un dispositif de correction de distorsion du courant alternatif d'entrée du modulé Mi considéré par l'utilisation d'une boucle de courant par module Mi ayant comme consigne la tension d'entrée du réseau, le dispositif de correction recevant par une entrée (ec2), un signal up image du courant dans le circuit primaire (52) du circuit de découpage, par une autre entrée (ec3) un signal ur image de la tension Vrd en sortie circuit de redressement (50) de courant monophasé du module Mi et fournissant par une sortie (Cd1, Cd2, Cd3) un signal de commande du transistor à découpage (Trd) du module Mi considéré.

6. Alimentation haute tension selon la revendication 5, **caractérisé en ce que** le dispositif de correction de distorsion comporte un dispositif de compensation (140) des variations de la tension d'entrée du réseau, le dispositif de compensation comportant un diviseur analogique (144) ayant une entrée a de division attaquée par le signal ur image de la tension Vrd en sortie circuit de redressement (50), une entrée b de division attaquée par le signal ur image de la tension Vrd en sortie circuit de redressement (50) filtré par un passe bas FPB (146) puis multiplié par deux par un multiplicateur x2 (148) et une sortie (a/b) fournissant un signal urf image de la tension d'entrée réseau stabilisée pour attaquer une entrée du dispositif de correction de la distorsion.

7. Alimentation haute tension selon la revendication 6, **caractérisé en ce que** le dispositif de correction de distorsion comporte un multiplicateur de signaux (124) recevant par une entrée (m2) le signal d'erreur uer en sortie de l'amplificateur d'erreur AMP (134) et, par une autre entrée (m1) le signal urf en sortie du diviseur analogique (144), le multiplicateur de signaux fournissant, à une sortie, le signal de consigne de la tension d'entrée réseau (Smt).

8. Alimentation haute tension selon la revendication 7, **caractérisé en ce que** chacun des circuits de contrôle CCMi comporte un circuit logique de commandé (118, 110) pour fournir à partir du signal de commande du transistor à découpage (Trd) du module Mi considéré en sortie du dispositif de correction de la distorsion et, à partir du signal d'absence de courant secondaire Is, un signal logique de rapport cyclique T1i/Td variable pour la commande du transistor de découpage (Trd) du module Mi considéré.

9. Alimentation haute tension selon l'une des revendications 1 à 8, **caractérisé en ce que** chacun des modules M1, M2, ...Mi,...Mn comporte, pour le contrôle de l'alimentation :

   - un transformateur (Tmp) de courant primaire fournissant une tension de mesure up image du courant instantanée Ip dans le circuit primaire (52) du circuit de découpage (51),
   - un transformateur (Tms) de courant secondaire fournissant une tension de mesure us image du courant instantanée Is somme des courants instantanés (Is1, Is2, Is3) dans les p circuits de secondaires HT (S1, S2, ...Sj,...Sp) de l'alimentation.

10. Alimentation haute tension selon la revendication 9, **caractérisé en ce que** les fils de connexion entre les bobinages secondaires Bs1, Bs2,...Bsj,.. Bsp et les respectives diodes de redressement Ds1, Ds2,...Dsj,... Dsp passent dans le primaire du transformateur (Tms) de courant secondaire.

11. Alimentation haute tension selon l'une des revendications 1 à 10, **caractérisé en ce que** lorsque la charge de l'alimentation est pulsée, le courant de sortie de l'alimentation variant entre 0 ampère et une valeur de courant de charge Ich maximum de façon répétitive à une fréquence Fch proche de la fréquence du réseau, un signal de neutralisation unet, à la fréquence Fch de la variation de la charge, est appliqué, à travers une résistance (R4), à l'entrée - de l'amplificateur d'erreur AMP (134).

**12.** Alimentation haute tension selon la revendication 11, **caractérisé en ce que** le signal de neutralisation unet est une image de la variation du courant de charge appliqué en opposition de phase avec la variation du signal de lecture de uVk à l'entrée - de l'amplificateur d'erreur AMP (134) produite par la variation de courant de charge à la fréquence de cette variation afin de la neutraliser.

**13.** Alimentation haute tension selon l'une des revendications 1 à 12, **caractérisé en ce qu'**elle connectée sur un réseau triphasé (n=3) chacun des trois modules de conversion M1, M2, M3 comportant trois circuits de sortie S1, S2, S3 (P=3) pour fournir trois HT de sortie (Vk1, Vk2, Vk3)

**Claims**

**1.** High-voltage power supply intended to be connected, by a network input (E1, E2, E3), to an AC network (20) of frequency Fr, with n phases P1, P2,..Pi..Pn, n being an integer greater than or equal to 2, i being the rank of the phase ranging between 1 and n, and providing HV high DC output voltages (Vk1, Vk2, Vk3) at at least two HV outputs (Sk1, Sk2, Sk3),
the power supply comprising:

   - a single-phase high-voltage conversion module Mi per phase Pi of the network having a current rectification circuit (50) connected, by a single-phase input (Em) of the conversion module Mi, to a respective phase Pi of the network and, by a rectified-current output (s1, s2), to a switching circuit (51) having at least one switching transistor (Trd) for switching the said rectified current at a switching frequency (Fd) and p secondary HV circuits S1, S2,...Sj,...Sp, each providing a secondary HV Vc1, Vc2, Vcj,...Vcp, p being an integer greater than or equal to 2, j being the rank of the secondary HV circuit ranging between 1 and p,
   - a control and regulation unit UC (60) for the power supply comprising a control circuit CCM1, CCM2,.. CCMi,... CCMn (102, 104, 106) per conversion module M1, M2,..Mi...Mn providing a control signal Cd1, Cd2,...Cdi,...Cdn so as to place the conversion module switching transistor (Trd) either in an on state during a first time period t1 i or in an off state during a following second time period t2i at the switching frequency Fd,

t1i being the duration of the on state of the switching transistor (Trd) of the module Mi,
t2i being the duration of the off state of the switching transistor (Trd) of the same module Mi,

$$Td = t1i + t2i \text{ being the switching period with } Td = 1/Fd,$$

**characterized in that** the n secondary HV circuits Sj of like rank j of the n modules M1, M2, ...Mi,...Mn are connected in series with the n secondary HV circuits Sj+1 of rank j+1 of the n conversion modules so as to provide the HV high DC output voltages (Vk1, Vk2, Vk3) which are the sum of the secondary voltages Vc1, Vc2,...Vcj,..Vcp of the secondary HV circuits in series.

**2.** High-voltage power supply according to Claim 1, **characterized in that** the switching circuit (51) comprises a transformer (Tr) having a primary winding BP and p secondary windings Bs1, Bs2, Bsj,... Bsp, the primary winding BP being in series with the switching transistor (Trd) in parallel with a holding capacitor (Czvs) forming a primary switching circuit (52), a secondary winding Bsj in series with at least one rectification diode Dsj forming a secondary HV circuit Sj providing the secondary HV Vcj.

**3.** High-voltage power supply according to one of Claims 1 or 2, **characterized in that** the control and regulation unit UC (60) for the power supply comprises an error amplifier AMP (134) providing an error signal uer which is the difference between a voltage uVk which is the image of the output HV (Vk1, Vk2, Vk3) of the power supply and a reference signal urefVk of this output HV so as to regulate, through a servocontrol loop, the output high-voltage HV (Vk1, Vk2, Vk3) of the power supply.

**4.** High-voltage power supply according to one of Claims 1 to 3, **characterized in that** each of the control circuits CCMi of a module Mi comprises a level-comparator COMP (116) receiving at a + input a signal us which is the image of the current in the secondary circuit (54), the other - input being connected to a reference potential (M) and providing at an output (Out) a signal of absence of secondary current Is in the output circuits of the switching circuit (51) so as to turn on the switching transistor (Trd) of the relevant module Mi when the secondary current Is passes through 0 amperes.

5. High-voltage power supply according to one of Claims 1 to 4, **characterized in that** each of the control circuits CCMi comprises a device for correcting the distortion of the AC input current of the relevant module Mi through the use of a current loop per module Mi having the input voltage of the network as setpoint, the correction device receiving through an input (ec2) a signal up which is the image of the current in the primary circuit (52) of the switching circuit, through another input (ec3) a signal ur which is the image of the voltage Vrd output by the single-phase current rectification circuit (50) of the module Mi and providing through an output (Cd1, Cd2, Cd3) a control signal for the switching-type transistor (Trd) of the relevant module Mi.

6. High-voltage power supply according to Claim 5, **characterized in that** the distortion correction device comprises a device (140) for compensating the variations in the input voltage of the network, the compensation device comprising an analogue divider (144) having a division input a driven by the signal ur which is the image of the voltage Vrd output by the rectification circuit (50), a division input b driven by the signal ur which is the image of the voltage Vrd output by the rectification circuit (50) filtered by a low-pass FPB (146) and then multiplied by two by a multiplier x2 (148) and an output (a/b) providing a signal urf which is the image of the network input voltage stabilized so as to drive an input of the device for correcting distortion.

7. High-voltage power supply according to Claim 6, **characterized in that** the distortion correction device comprises a signal multiplier (124) receiving through one input (m2) the error signal uer output by the error amplifier AMP (134) and, through another input (m1), the signal urf output by the analogue divider (144), the signal multiplier providing, at an output, the setpoint signal for the network input voltage (Smt).

8. High-voltage power supply according to Claim 7, **characterized in that** each of the command circuits CCMi comprises a control logic circuit (118, 110) so as to provide on the basis of the control signal for the switching-type transistor (Trd) of the relevant module Mi output by the device for correcting distortion and, on the basis of the signal of absence of secondary current Is, a logic signal of variable duty ratio T1i/Td for the control of the switching transistor (Trd) of the relevant module Mi.

9. High-voltage power supply according to one of Claims 1 to 8, **characterized in that** each of the modules M1, M2, ...Mi,...Mn comprises, for the control of the power supply:

   - a primary current transformer (Tmp) providing a measurement voltage up which is the image of the instantaneous current Ip in the primary circuit (52) of the switching circuit (51),
   - a secondary current transformer (Tms) providing a measurement voltage us which is the image of the instantaneous current Is which is the sum of the instantaneous currents (Is1, Is2, Is3) in the p secondary HV circuits (S1, S2, ...Sj,...Sp) of the power supply.

10. High-voltage power supply according to Claim 9, **characterized in that** the connection wires between the secondary windings Bs1, Bs2,...Bsj,.. Bsp and the respective rectification diodes Ds1, Ds2,...Dsj,... Dsp pass via the primary of the secondary current transformer (Tms).

11. High-voltage power supply according to one of Claims 1 to 10, **characterized in that** when the load of the power supply is pulsed, the output current of the power supply varying between 0 amperes and a maximum load current value Ich in a repetitive manner at a frequency Fch close to the frequency of the network, a neutralization signal unet, at the frequency Fch of the variation in the load, is applied, through a resistor (R4), to the - input of the error amplifier AMP (134).

12. High-voltage power supply according to Claim 11, **characterized in that** the neutralization signal unet is an image of the variation in the load current applied in phase opposition with the variation in the reading signal uVk at the - input of the error amplifier AMP (134), produced by the variation in load current at the frequency of this variation so as to neutralize it.

13. High-voltage power supply according to one of Claims 1 to 12, **characterized in that** it is connected to a three-phase network (n=3), each of the three conversion modules M1, M2, M3 comprising three output circuits S1, S2, S3 (P=3) so as to provide three output HVs (Vk1, Vk2, Vk3).

**Patentansprüche**

1. Hochspannungsstromversorgung, die dazu bestimmt ist, über einen Netzeingang (E1, E2, E3) mit einem Wechselstromnetz (20) mit der Frequenz Fr mit n Phasen P1, P2, ...Pi, ...Pn verbunden zu sein, wobei n eine ganze Zahl größer oder gleich 2 ist, wobei i der Rang der Phase zwischen 1 und n inklusive ist, und mindestens zwei HT-Ausgängen (Sk1, Sk2, Sk3) konstante Ausgangs-Hochspannungen HT (Vk1, Vk2, Vk3) bereitstellt, wobei die Versorgung aufweist:

   - ein einphasiges Hochspannungs-Umrichtungsmodul Mi durch Phase Pi des Netzes mit einem Gleichrichterkreis (50) des Stroms, verbunden durch einen einphasigen Eingang (Em) des Umrichtungsmoduls Mi über eine jeweilige Phase Pi des Netzes und über einen Ausgang (s1, s2) des gleichgerichteten Stroms mit einem Zerhackerkreis (51) mit mindestens einem Zerhackertransistor (Trd) mit einer Zerhackerfrequenz (Fd) des gleichgerichteten Stroms und p sekundären HT-Kreisen S1, S2, ...Sj, ...Sp, die jeweils eine sekundäre HT Vc1, Vc2, Vcj, ...Vcp bereitstellen, wobei p eine ganze Zahl größer oder gleich 2 ist, wobei j der Rang des sekundären HT-Kreises zwischen 1 und p inklusive ist,
   - eine Steuer- und Regeleinheit UC (60) der Versorgung, die einen Steuerkreis CCM1, CCM2, ...CCMi, ...CCMn (102, 104, 106) je Umrichtungsmodul M1, M2, ...Mi, ...Mn aufweist, die ein Steuersignal Cd1, Cd2, ...Cdi, ...Cdn bereitstellt, um den Zerhackertransistor (Trd) des Umrichtungsmoduls entweder in einen Durchgangszustand während einer ersten Zeitdauer t1i oder in einen Blockadezustand während einer zweiten Zeitdauer t2i mit der Zerhackerfrequenz Fd zu versetzen,

   wobei t1i die Dauer des Durchgangszustands des Zerhackertransistors (Trd) des Moduls Mi ist,
   wobei t2i die Dauer des Blockadezustands des Zerhackertransistors (Trd) desselben Moduls Mi ist,

$$\text{wobei } Td = t1i + t2i \text{ der Zerhackerzeitraum ist mit } Td = 1/Fd,$$

   **dadurch gekennzeichnet, dass** die n sekundären HT-Kreise Sj mit demselben Rang j der n Module M1, M2, ...Mi, ...Mn mit den n sekundären HT-Kreisen Sj+1 mit dem Rang j+1 der n Umrichtungsmodule in Reihe geschaltet sind, um konstante Ausgangs-Hochspannungen HT (Vk1, Vk2, Vk3) als Summe der sekundären Spannungen Vc1, Vc2, ...Vcj, ...Vcp der in Reihe geschalteten sekundären HT-Kreise bereitzustellen.

2. Hochspannungsstromversorgung nach Anspruch 1, **dadurch gekennzeichnet, dass** der Zerhackerkreis (51) einen Transformator (Tr) mit einer primären Wicklung BP und p sekundären Wicklungen Bs1, Bs2, Bsj, ...Bsp aufweist, wobei die primäre Wicklung BP mit dem Zerhackertransistor (Trd) in Reihe ist parallel mit einer Haltekapazität (Czvs), wobei ein primärer Zerhackerkreis (52) gebildet wird, wobei eine sekundäre Wicklung Bsj in Reihe mit mindestens einer Gleichrichterdiode Dsj einen sekundären HT-Kreis Sj bildet, der die sekundäre HT Vcj bereitstellt.

3. Hochspannungsstromversorgung nach einem der Ansprüche 1 oder 2, **dadurch gekennzeichnet, dass** die Steuer- und Regeleinheit UC (60) der Versorgung einen Fehlerverstärker AMP (134) aufweist, der ein Fehlersignal uer als Differenz zwischen einer gespiegelten Spannung uVk der Ausgangs-HT (Vk1, Vk2, Vk3) der Versorgung und einem Referenzsignal urefVk dieser Ausgangs-HT bereitstellt, um über einen Regelkreis die Ausgangshochspannung HT (Vk1, Vk2, Vk3) der Versorgung zu regeln.

4. Hochspannungsstromversorgung nach einem der Ansprüche 1 bis 3, **dadurch gekennzeichnet, dass** jeder der Steuerkreise CCMi eines Moduls Mi einen Niveauvergleicher COMP (116) aufweist, der an einem Eingang + ein gespiegeltes Signal us des Stroms im sekundären Kreis (54) empfängt, wobei der andere Eingang - mit einem Referenzpotential (M) verbunden ist und einem Ausgang (Out) ein Abwesenheitssignal des sekundären Stroms Is in den Ausgangskreisen des Zerhackerkreises (51) bereitstellt, um beim Übergang durch 0 Ampere des sekundären Kreises Is die Versetzung des Zerhackertransistor (Trd) des entsprechenden Moduls Mi in den Durchgangszustand zu befehlen.

5. Hochspannungsstromversorgung nach einem der Ansprüche 1 bis 4, **dadurch gekennzeichnet, dass** jeder der Steuerkreise CCMi eine Korrekturvorrichtung der Verzerrung des Eingangs-Wechselstroms des entsprechenden Moduls Mi durch Verwendung einer Stromschleife durch Modul Mi mit der Eingangsspannung des Netzes als Sollwert aufweist, wobei die Korrekturvorrichtung über einen Eingang (ec2) ein gespiegeltes Signal up des Stroms im Primärkreis (52) des Zerhackerkreises, über einen anderen Eingang (ec3) ein gespiegeltes Signal ur der Spannung Vrd am Ausgang des Gleichrichterkreises (50) des einphasigen Stroms des Moduls Mi empfängt und über einen Ausgang (Cd1, Cd2, Cd3) ein Steuersignal des Zerhackertransistors (Trd) des entsprechenden Moduls Mi bereitstellt.

6. Hochspannungsstromversorgung nach Anspruch 5, **dadurch gekennzeichnet, dass** die Korrekturvorrichtung der Verzerrung eine Kompensationsvorrichtung (140) der Eingangs-Spannungsschwankungen des Netzes aufweist, wobei die Kompensationsvorrichtung einen analogen Teiler (144) aufweist mit einem Teilereingang a, der von dem gespiegelten Signal ur der Spannung Vrd am Ausgang des Gleichrichterkreises (50) angesprochen wird, einem Teilereingang b, der von dem gespiegelten Signal ur der Spannung am Ausgang des Gleichrichterkreises (50) angesprochen wird, der von einem Tiefpass FPB (146) gefiltert und dann mit zwei von einem Multiplikator x2 (148) multipliziert wird, und einem Ausgang (a/b), der ein gespiegeltes Signal urf der stabilisierten Netzeingangsspannung bereitstellt, um einen Eingang der Korrekturvorrichtung der Verzerrung anzusprechen.

7. Hochspannungsstromversorgung nach Anspruch 6, **dadurch gekennzeichnet, dass** die Korrekturvorrichtung der Verzerrung einen Signalmultiplikator (124) aufweist, der über einen Eingang (m2) das Fehlersignal uer am Ausgang des Fehlerverstärkers AMP (134) empfängt und über einen anderen Eingang (m1) das Signal urf am Ausgang des analogen Teilers (144), wobei der Signalmultiplikator einem Ausgang das Sollwertsignal der Netzeingangsspannung (Smt) bereitstellt.

8. Hochspannungsstromversorgung nach Anspruch 7, **dadurch gekennzeichnet, dass** jeder der Kontrollkreise CCMi einen logischen Steuerkreis (118, 110) aufweist, um ab dem Steuersignal des Zerhackertransistors (Trd) des entsprechenden Moduls Mi am Ausgang der Korrekturvorrichtung der Verzerrung und ab dem Abwesenheitssignal des sekundären Stroms Is ein variables logisches Signal des zyklischen Verhältnisses T1i/Td für die Steuerung des Zerhackertransistors (Trd) des entsprechenden Moduls Mi bereitzustellen.

9. Hochspannungsstromversorgung nach einem der Ansprüche 1 bis 8, **dadurch gekennzeichnet, dass** jedes der Module M1, M2, ...Mi, ...Mn für die Versorgungskontrolle aufweist:

   - einen Transformator (Tmp) des primären Stroms, der eine gespiegelte Messspannung up des momentanen Stroms Ip im Primärkreis (52) des Zerhackerkreises (51) bereitstellt,
   - einen Transformator (Tms) des sekundären Stroms, der eine gespiegelten Messspannung us des momentanen Stroms Is als Summe der momentanen Ströme (Is1, Is2, Is3) in den p sekundären HT-Kreisen (S1, S2, ...Sj, ...Sp) der Versorgung bereitstellt.

10. Hochspannungsversorgung nach Anspruch 9, **dadurch gekennzeichnet, dass** die Verbindungsdrähte zwischen den sekundären Wicklungen Bs1, Bs2, ...Bsj, ...Bsp und den jeweiligen Gleichrichterdioden Ds1, Ds2, ...Dsj, ...Dsp in den Primären des Transformators (Tms) des sekundären Stroms reichen.

11. Hochspannungsstromversorgung nach einem der Ansprüche 1 bis 10, **dadurch gekennzeichnet, dass**, wenn die Last der Versorgung gepulst ist, wobei der Ausgangsstrom der Versorgung zwischen 0 Ampere und einem maximalen Laststromwert Ich wiederholend mit einer Frequenz Fch nahe der Netzfrequenz schwankt, ein Neutralisierungssignal unet mit der Frequenz Fch der Lastschwankung über einen Widerstand (R4) am Eingang - des Fehlerverstärkers AMP (134) angewendet wird.

12. Hochspannungsstromversorgung nach Anspruch 11, **dadurch gekennzeichnet, dass** das Neutralisierungssignal unet ein Spiegel der Schwankung des Laststroms ist, angewendet in Phasenopposition mit der Schwankung des Lesesignals von uVk am Eingang - des Fehlerverstärkers AMP (134), der von der Schwankung des Laststroms in der Frequenz dieser Schwankung produziert wird, um sie zu neutralisieren.

13. Hochspannungsstromversorgung nach einem der Ansprüche 1 bis 12, **dadurch gekennzeichnet, dass** sie an ein Dreiphasennetz (n=3) angeschlossen ist, wobei jedes der drei Umrichtungsmodule M1, M2, M3 drei Ausgangskreise S1, S2, S3 (P=3) aufweist, um drei Ausgangs-HT (Vk1, Vk2, Vk3) bereitzustellen.

FIG.1

EP 2 245 730 B1

FIG.2

FIG.3

EP 2 245 730 B1

Vrd

FIG.4a

Is

FIG.4b

Ip

FIG.4c

Cd1

1

0

t1    Td

FIG.4d

t

FIG.5a

FIG.5b

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006043837 A2
- US 5311419 A, SHIRES EDWIN J.
- US 20010036094 A1, STRAND TIMOTHY
- US 5731969 A, SMALL KENNETH T.